# FASCICULE DE BREVET EUROPEEN

(11) **EP 0 672 631 B1**
(45) Date de publication et mention de la délivrance du brevet: **10.06.1998**
(21) Numéro de dépôt: 95400527.8
(22) Date de dépôt: 13.03.1995
(51) Int. Cl.: C03C 8/14, C04B 41/89

(54) **Revêtement haute température, en deux couches, sur substrat céramique et son obtention**
Zweischicht Hochtemperaturbekleidung auf keramischem Substrat und ihre Herstellung
Two-layer high-temperature coating on ceramic substrate and its production

(30) Priorité: 16.03.1994 FR 9403049
(43) Date de publication de la demande: 20.09.1995
(73) Titulaire: AEROSPATIALE Société Nationale Industrielle, 75781 Paris Cédex 16 (FR); VIAM ALL Russian Institut of Aviation Materials, 107005 Moscou (RU)
(72) Inventeur: Solntsev, Stanislav Serguevich, 115558 Moscou (RU); Tjurin, Vladimir Mihailovich, 129515 Moscou (RU); Izaeva, Natalia Vladimirovna, 129278 Moscou (RU); Bersenev, Alexei Yurievich, 119361 Moscou (RU); Solovjeva, Galina Anatolievna, 125015 Moscou (RU)
(74) Mandataire: Lepeudry-Gautherat, Thérèse

(56) Documents cités:
- US-A- 3 953 646
- US-A- 4 831 333
- CHEMICAL ABSTRACTS, vol. 118, no. 24, 14 Juin 1993 Columbus, Ohio, US; abstract no. 239444q, page 369; & SU-A-1 759 816 (I.B.BANKOVSKAYA) 7 Septembre 1992

## Description

L'invention concerne des matériaux, plus précisément des revêtements, pour la protection des substrats céramiques, notamment poreux, contre l'érosion, les défaillances chimiques et les défaillances mécaniques.

Les matériaux céramiques fibreux à base d'oxydes réfractaires fonctionnant à des températures élevées sont largement utilisés. Les conditions d'utilisation de ces matériaux imposent des exigences aux revêtements utilisés pour leur protection : haute tenue en température, résistance à l'érosion, stabilité thermochimique et stabilité de phase élevées.

On connaît à présent toute une série de revêtements résistants à l'érosion qui fonctionnent à des températures allant jusqu'à 1260°C. On connaît un revêtement à deux couches comprenant une couche barrière et une couche d'émaillage (voir le brevet US 3 953 646) . La couche barrière est constituée d'un dépôt de silice fondue comprenant d'environ 80 à environ 90 % en poids de matière solide. Le revêtement est appliqué sur le substrat par pulvérisation. La couche barrière est cuite à une température d'environ 930 à environ 1370°C. La couche d'émaillage constituée de verre à haute teneur en silice, de verre de type borosilicate et d'un agent d'émittance est appliquée sur la couche barrière. L'agent d'émittance est choisi dans le groupe constitué par le carbure de silicium, les oxydes de chrome, de cobalt et de nickel, les spinelles au nickel-chrome, le nitrure de silicium et les oxydes mixtes calcinés de fer, de chrome et/ou de nickel. Le verre à haute teneur en silice (Corning Glass n° 7913) ne contient pas moins de 94 % en poids de SiO₂. Le verre de type borosilicate (Corning Glass n° 7740) a la composition suivante (en poids) 70 à 87 % de SiO₂, 10 à 20 % de B₂O₃, 2 à 5 % de Na₂O, 1 à 5 % de Al₂O₃.

Le composant vitreux à haute teneur en silice et le composant vitreux de type borosilicate sont utilisés dans un rapport en poids d'environ 3:1 à environ 19:1, et les composants vitreux (verre à haute teneur en silice et verre de type borosilicate) et l'agent d'émittance sont utilisés dans un rapport en poids allant de 50:1 à environ 4:1. Une barbotine aqueuse contenant d'environ 10 à environ 90 % en poids de revêtement d'émaillage est cuite à une température allant de 930 à environ 1370°C.

On connaît dans la technique (voir le brevet US 3 955 034) un revêtement à trois composants pour l'isolation de la silice, comprenant une couche barrière de silice, une couche d'émittance comprenant un composant vitreux à haute teneur en silice et un agent d'émittance choisi dans le groupe constitué par le carbure de silicium, l'oxyde de nickel, l'oxyde de chrome, l'oxyde de cobalt, une spinelle au nickel-chrome, le nitrure de silicium, des oxydes mixtes calcinés de fer, chrome et cobalt, avec un rapport en poids du verre à haute teneur en silice à l'agent d'émittance d'environ 50:1 à environ 4:1, et une couche de revêtement de l'émaillage constituée de verre à haute teneur en silice et de verre de type borosilicate, dans un rapport en poids du verre à haute teneur en silice au verre de type borosilicate d'environ 3:1 à environ 19:1. Le revêtement est cuit à une température allant de 930 à environ 1370°C.

Ces revêtements ne procurent ni une résistance aux chocs thermiques, ni une stabilité thermique de l'émittance suffisantes, et ils subissent un retrait.

Pour surmonter les problèmes évoqués ci-dessus, on a proposé un revêtement monocouche (voir le brevet US 4 093 771) qui est préparé en faisant réagir un composé choisi dans le groupe de substances constitué par le tétraborure de silicium, l'hexaborure de silicium, d'autres siliciures du bore, le bore et des mélanges de ces substances, avec un fritté de verre réactif composé de verre de type borosilicate poreux à haute teneur en silice, et d'oxyde de bore. Une mince couche de verre de type borosilicate est formée sur des particules finement divisées de verre à haute teneur en silice, ce qui améliore le frittage du revêtement sans accroissement important du coefficient de dilatation thermique.

Le fritté de verre réactif est avantageusement préparé en mélangeant environ 2 à 10 parties en poids d'oxyde de bore avec 100 parties en poids de verre de type borosilicate poreux à haute teneur en silice, tel que du verre Vycon® 7930. Le verre de type borosilicate à haute teneur en silice Vycon® 7930 présente une porosité d'approximativement 28 %. L'oxyde de bore est dissous dans 200 à 400 parties en poids d'eau déionisée. Le mélange est agité à environ 95°C, puis séché pendant une durée allant jusqu'à 24 heures, à une température de 75 à 95°C. Le fritté de verre résultant est dispersé, tamisé et cuit à 1150°C pendant 1 heure. Le composite fritté résultant est broyé pour donner une poudre et tamisé.

Une composition typique serait constituée de 97,5 % en poids de fritté de verre réactif contenant 5,5 % en poids d'oxyde de bore, combiné avec 2,5 % en poids de tétraborure de silicium composé de 63 ± 3 % en poids de silicium, 36 ± 3 en poids de bore et moins de 0,2 % en poids de magnésium. La barbotine de revêtement est préparée en mélangeant des particules finement divisées de fritté de verre réactif et de tétraborure de silicium, avec un support tel que l'éthanol et un pré-liant tel que la méthylcellulose, avec une proportion en poids de composants solides de 35 à 50 %. Le mélange des composants de revêtement est broyé dans un broyeur à billes en alumine avec des billes d'alumine, pendant 3 à 12 heures. Le revêtement est appliqué par pulvérisation. Les échantillons revêtus sont séchés pendant 2 à 5 heures à des températures dans la gamme de 20 à environ 70°C. Après séchage, les échantillons revêtus sont émaillés dans un four pendant 1 heure 1/2 à 1215°C. Le revêtement présente une émittance d'environ 0,90 à 0,93 depuis la température ambiante jusqu'au-delà de 1260°C. Le coefficient de dilatation thermique est de 1,1.10⁻⁶K⁻¹.

On connaît également un revêtement perfectionné de faible masse volumique pour la protection de matériaux poreux à base d'aluminosilicates qui a une température de service allant jusqu'à 1300°C. La composition du revêtement comprend 77,5 % en poids de fritté de verre réactif, 2,5 % en poids de tétraborure de silicium et 20 % en poids de disiliciure de molybdène. Le revêtement est formé sur le substrat à 1230°C pendant 1 heure 1/2 (voir : Advanced Porous Coating for low density Ceramic Insulation Materials, J. Amer. Ceram. Soc., vol. 72, n° 6, pages 1003-1010, 1989).

L'utilisation de verre de type borosilicate à haute teneur en silice et présentant une surface active dans la composition de revêtement peut être à l'origine d'une diminution de la stabilité thermochimique et de la stabilité de phase.

Les transformations de phases dans le revêtement sont liées à la formation de cristobalite α qui provoque des fissurations du revêtement.

La présente invention fournit un revêtement haute température sur substrat céramique qui ne présente pas les inconvénients des revêtements de l'art antérieur. En effet, le revêtement selon l'invention présente une stabilité thermochimique élevée, une grande résistance aux chocs thermiques, des phases très stables et un faible retrait.

Plus précisément, l'invention fournit un revêtement haute température sur substrat céramique, notamment poreux, caractérisé en ce que ce revêtement comprend une couche (primaire) barrière contenant du verre de quartz et du tétraborure de silicium à plus de 96 % en poids de SiB₄, et une couche (de finition) d'émaillage à émittance contenant du verre à haute teneur en silice et du tétraborure de silicium à plus de 96 % en poids de SiB₄, lesquelles couches présentent les compositions en poids suivantes :
couche barrière :
- tétraborure de silicium (à plus de 96 % en poids de SiB₄) : 0,1 à 10 % ;
- verre de quartz : 90 à 99,9 % ;
couche d'émaillage à émittance :
- tétraborure de silicium (à plus de 96 % en poids de SiB₄) : 1,5 à 5,0 % ;
- verre à haute teneur en silice : 95 à 98,5 %.

Le substrat céramique est constitué d'un matériau céramique comprenant en général un ou plusieurs composés choisis dans le groupe constitué par Al₂O₃, ZrO₂, SiO₂, SiC et Si₃N₄. Sa masse volumique est en général supérieure à 100 kg/m³ (0,1 g/cm³).

Dans le revêtement, la teneur en particules de tétraborure de silicium dont la taille est inférieure à 5 µm est de préférence de 70 à 80 % en poids dudit tétraborure de silicium, la teneur en SiO₂ dans le verre de quartz est de préférence de 99,96 % en poids et le verre à haute teneur en silice comprend avantageusement, en poids : 94 à 96 % de SiO₂ ; 3,5 à 6 % de B₂O₃ ; 0,1 à 0,5 % de Al₂O₃ ; et 0,1 à 0,5 % de Na₂O.

Les propriétés thermochimiques du verre à haute teneur en silice dues à sa composition spécifique, notamment en oxydes de silicium, d'aluminium et de sodium, sa haute pureté et sa dispersibilité spécifique assurent l'interaction chimique souhaitée entre les composants amorphe (verre) et polycristallin céramique (tétraborure de silicium) du revêtement. Il en résulte que lors de la cuisson du substrat céramique muni du revêtement, un durcissement se produit dans sa couche réactive d'émaillage à émittance. Ce durcissement permet de diminuer substantiellement le retrait du substrat céramique, d'augmenter la résistance aux chocs thermiques, et d'augmenter la thermostabilité du revêtement pour stabiliser les propriétés thermochimiques.

La présence de plus de 98,5 % en poids de verre à haute teneur en silice et de moins de 1,5 % en poids de tétraborure de silicium dans la couche d'émaillage à émittance augmente la température de ramollissement du revêtement, ce qui diminue ses propriétés de stabilité de phase et d'émittance. Si cette couche comprend moins de 95 % en poids de verre à haute teneur en silice et plus de 5 % en poids de tétraborure de silicium, elle présente une tenue en température et une stabilité thermochimique insuffisantes.

Une teneur de plus de 80 % en poids en particules de tétraborure de silicium ayant une taille inférieure à 5µm a pour conséquence que son aptitude à la pénétration à travers le substrat céramique poreux augmente substantiellement, ce qui conduit à un retrait de ce dernier. Une teneur en particules de ce type inférieure à 70 % en poids conduit à une distribution locale non uniforme du tétraborure de silicium à travers la matrice vitreuse, ce qui augmente la contrainte du revêtement et diminue sa résistance aux chocs thermiques.

L'humidité et la dispersion du tétraborure de silicium sont contrôlées. Si la teneur en verre de quartz dans la couche barrière est supérieure à 99,9 % en poids, l'interface entre la couche barrière et le substrat a une densité trop faible, ce qui diminue l'adhérence entre le revêtement et le substrat et augmente la pénétrabilité de la couche d'émaillage à émittance, ce qui provoque un retrait. Si la teneur en verre de quartz est inférieure à 90 % en poids, la densité de la couche barrière augmente substantiellement, ce qui conduit à son imprégnation non uniforme par la composition de la barbotine destinée à former la couche d'émaillage à émittance et à l'apparition de fissures dans cette dernière.

L'utilisation de verre de type borosilicate à haute teneur en silice, présentant une surface active, dans la composition de revêtement pourrait produire une diminution de sa stabilité thermochimique et de sa stabilité de phase.

Les transformations de phases dans le revêtement sont liées à la formation de cristobalite α, ce qui provoque une fissuration du revêtement.

La pénétration du revêtement dans le substrat poreux confère une grande adhérence. Une couche densifiée ayant une épaisseur de 70 à 140 µm et une masse volumique pouvant atteindre 500 kg/m³ (0,5 g/cm³) est en général formée sur le substrat. Le revêtement est avantageusement appliqué au moyen d'air comprimé à une pression de 0,8.10⁵ à 1,1.10⁵ Pa (0,8 à 1,1 atm). Le rapport en poids phase de dispersion (poudre de revêtement) : milieu de dispersion (de préférence eau distillée) est de 1:1 à 1:5. Une teneur élevée en milieu de dispersion, notamment en eau conduit à une composition chimique du revêtement non-uniforme. Une faible teneur en eau conduit à une diminution de l'adhérence entre le revêtement et le substrat. Le revêtement est appliqué sur la surface du substrat céramique ayant reçu un traitement préliminaire, par exemple par dépoussiérage du feutre formant le substrat, pour une meilleure adhérence.

La cuisson de la couche barrière (primaire) à des températures de 1100 à 1150°C pendant 10 à 20 minutes et la cuisson de la couche d'émaillage à émittance (couche de finition) à des températures de 1250 à 1300°C pendant 10 à 20 minutes permettent de diminuer le retrait du matériau.

Le retrait du matériau revêtu a lieu à des températures de cuisson supérieures à 1300°C et pour des durées de cuisson supérieures à 20 minutes, tandis que les propriétés d'émittance diminuent avec des températures et des durées de cuisson inférieures aux valeurs susindiquées.

Selon un autre de ses aspects, l'invention a donc pour objet un procédé pour munir un substrat céramique, notamment poreux, du revêtement décrit ci-dessus, caractérisé en ce qu'il comprend essentiellement les étapes consistant à :
- préparer une première barbotine d'une poudre constituée de 0,1 à 10 % en poids de tétraborure de silicium (à plus de 96 % en poids de SiB₄) et de 90 à 99,9 % en poids de verre de quartz, dans un milieu de dispersion compatible, de préférence de l'eau distillée, avec un rapport en poids de la poudre au liquide de 1:1 à 1:5 ;
- appliquer, par pulvérisation sous pression, cette première barbotine sur le substrat céramique à revêtir ayant subi un traitement de préparation ;
- sécher la couche ainsi obtenue et la cuire à une température de 1100 à 1150°C pendant 10 à 20 minutes, pour obtenir une couche barrière ;
- préparer une seconde barbotine d'une poudre constituée de 1,5 à 5,0 % en poids de tétraborure de silicium (à plus de 96 % en poids de SiB₄) et de 95 à 98,5 % en poids de verre à haute teneur en silice, dans un milieu de dispersion compatible, de préférence de l'eau distillée, avec un rapport en poids de la poudre au liquide de 1:1 à 1:5 ;
- appliquer, par pulvérisation sous pression, cette seconde barbotine sur la couche barrière formée précédemment ;
- sécher la couche ainsi obtenue et la cuire à une température de 1250 à 1300°C pendant 10 à 20 minutes , pour obtenir une couche d'émaillage à émittance.

Les exemples qui suivent sont destinés à illustrer et mieux expliquer l'invention.

### Exemple 1 :

Un revêtement est préparé selon les techniques de revêtement par barbotine-cuisson.

On prépare d'abord la couche barrière (couche primaire). Du verre de quartz est broyé dans un broyeur à billes d'alumine pour donner une poudre ayant une surface spécifique de 0,6 à 1 m²/g, et tamisé. 95 parties en poids de verre de quartz et 5 parties en poids de tétraborure de silicium comprenant 70 % en poids de particules ayant une taille inférieure à 5 µm sont mélangées dans un récipient en polyéthylène pendant 25 heures. Une quantité pesée de poudre est diluée avec de l'eau distillée dans un rapport en poids de 1:1 et appliquée par pulvérisation à une pression d'air de 10⁵ Pa (1 atm) sur la surface préalablement traitée par dépoussiérage d'un matériau céramique à base de fibres. On applique une couche densifiée ayant une épaisseur de 100 µm. L'échantillon est séché à l'air pendant 30 minutes et dans un four à 80°C pendant 30 minutes. La couche barrière (couche primaire) est ensuite cuite à 1120°C pendant 15 minutes.

On applique ensuite la couche d'émaillage à émittance de refroidissement (couche de finition) sur la couche barrière.

La couche d'émaillage à émittance est préparée à partir de 95 parties en poids de verre à haute teneur en silice et de 5 parties en poids de tétraborure de silicium comprenant 70 % en poids de particules ayant une taille inférieure à 5 µm. Le verre est broyé dans un broyeur à billes d'alumine pour donner une poudre ayant une surface spécifique de 0,6 à 1 m²/g, et tamisé. Les poudres de verre et de tétraborure de silicium sont mélangées dans un récipient en polyéthylène pendant 48 heures.

Une quantité pesée de poudre est diluée avec de l'eau distillée, dans un rapport en poids de 1:3, et appliquée sur la couche barrière (couche primaire) par pulvérisation à une pression d'air de 10⁵ Pa (1,0 atm). L'échantillon est séché à l'air à 20°C pendant 30 minutes et au four à 80°C pendant 30 minutes. La couche d'émaillage à émittance est cuite à 1250°C pendant 15 minutes.

### Exemple 2 :

La couche barrière est préparée selon le processus de l'exemple 1. Elle comprend 98 % en poids de verre de quartz et 2 % en poids de tétraborure de silicium contenant 75 % en poids de particules ayant une taille inférieure à 5 µm. Le rapport poudre : eau est de 1:2 et la pression de l'air est de 0,8.10⁵ Pa (0,8 atm). L'épaisseur de la couche densifiée obtenue est de 70 µm. La couche barrière est cuite à 1150°C, pendant 10 minutes.

La couche d'émaillage à émittance est préparée selon le processus de l'exemple 1.

### Exemple 3 :

La couche d'émaillage à émittance comprend 98 % en poids de verre à haute teneur en silice et 2 % en poids de tétraborure de silicium contenant 80 % en poids de particules ayant une taille inférieure à 5 µm.

La couche d'émaillage à émittance (couche de finition) est appliquée sur une couche barrière (couche primaire) préparée selon le processus de l'exemple 2 et cuite à 1280°C, pendant 10 minutes.

Le revêtement est soumis à des essais de stabilité thermochimique, de stabilité de phase et de résistance à l'érosion dans un plasma d'air. Après 30 cycles à 1250°C, la teneur en cristobalite α n'est pas supérieure à 0,5 % en poids.

La stabilité thermochimique est évaluée par microscopie électronique à travers l'épaisseur de la couche poreuse (couche défectueuse formée pendant l'essai de stabilité thermochimique) dont la valeur est de 30 µm. L'émittance intégrale est de 0,86, le coefficient de dilatation thermique est de 1,1.10⁻⁶K⁻¹. Le revêtement ne subit pas de retrait.

## Revendications

1. Revêtement haute température sur substrat céramique, notamment poreux, caractérisé en ce que ce revêtement comprend une couche (primaire) barrière contenant du verre de quartz et du tétraborure de silicium à plus de 96 % en poids de SiB₄, et une couche (de finition) d'émaillage à émittance contenant du verre à haute teneur en silice et du tétraborure de silicium à plus de 96 % en poids de SiB₄, lesquelles couches présentent les compositions en poids suivantes :
couche barrière :
- tétraborure de silicium (à plus de 96 % en poids de SiB₄) : 0,1 à 10 % ;
- verre de quartz : 90 à 99,9 % ;
couche d'émaillage à émittance :
- tétraborure de silicium (à plus de 96 % en poids de SiB₄) : 1,5 à 5,0 % ;
- verre à haute teneur en silice : 95 à 98,5 %.

2. Revêtement selon la revendication 1, caractérisé en ce que la couche barrière est densifiée et présente une épaisseur de 70 à 140 µm et en ce que sa masse volumique peut atteindre 0,5 g/cm³.

3. Procédé pour munir un substrat céramique, notamment poreux, d'un revêtement selon la revendication 1, caractérisé en ce qu'il comprend essentiellement les étapes consistant à :
- préparer une première barbotine d'une poudre constituée de 0,1 à 10 % en poids de tétraborure de silicium (à plus de 96 % en poids de SiB₄) et de 90 à 99,9 % en poids de verre de quartz, dans un milieu de dispersion compatible, de préférence de l'eau distillée, avec un rapport en poids de la poudre au liquide de 1:1 à 1:5 ;
- appliquer, par pulvérisation sous pression, cette première barbotine sur le substrat céramique à revêtir ayant subi un traitement de préparation ;
- sécher la couche ainsi obtenue et la cuire à une température de 1100 à 1150°C pendant 10 à 20 minutes, pour obtenir une couche barrière ;
- préparer une seconde barbotine d'une poudre constituée de 1,5 à 5,0 % poids de tétraborure de silicium (à plus de 96 % en poids de SiB₄) et de 95 à 98,5 % en poids de verre à haute teneur en silice, dans un milieu de dispersion compatible, de préférence de l'eau distillée, avec un rapport en poids de la poudre au liquide de 1:1 à 1:5 ;
- appliquer, par pulvérisation sous pression, cette seconde barbotine sur la couche barrière formée précédemment ;
- sécher la couche ainsi obtenue et la cuire à une température de 1250 à 1300°C pendant 10 à 20 minutes , pour obtenir une couche d'émaillage à émittance.

4. Procédé selon la revendication 3, caractérisé en ce que le substrat céramique comprend un ou plusieurs composés choisis dans le groupe constitué par Al₂O₃, ZrO₂, SiO₂, SiC et Si₃N₄, et a une masse volumique supérieure à 0,1 g/cm³.

5. Procédé selon la revendication 3 ou 4, caractérisé en ce que la teneur en particules de tétraborure de silicium dont la taille est inférieure à 5 µm, est de 70 à 80 % en poids dudit tétraborure de silicium.

6. Procédé selon l'une quelconque des revendications 3 à 5, caractérisé en ce que la teneur en SiO₂ du verre de quartz est de 99,96 % en poids.

7. Procédé selon l'une quelconque des revendications 3 à 6, caractérisé en ce que le verre à haute teneur en silice a la composition en poids suivante :
| | | | |
|---|---|---|---|
| SiO₂ | 94 à 96 % | B₂O₃ | 3,5 à 6 % |
| Al₂O₃ | 0,1 à 0,5 % | Na₂O | 0,1 à 0,5 %. |

8. Procédé selon l'une quelconque des revendications 3 à 7, caractérisé en ce que les couches de revêtement sont appliquées sous une pression d'air de 0,8.10⁵ à 1,1.10⁵ Pa.

## Claims

1. A high temperature coating on a ceramic substrate, in particular porous, which coating comprises a barrier (primer) layer containing quartz glass and silicon tetraboride with over 96 weight % SiB₄, and an emissivity glaze (topcoat) layer including high silica glass and silicon tetraboride with over 96 weight % of SiB₄, which layers have the following weight compositions :
barrier layer :
- silicon tetraboride (with over 96 weight % of SiB₄) : 0.1 to 10%;
- quartz glass: 90 to 99.9%;
emissivity glaze layer:
- silicon tetraboride (with over 96 weight % of SiB₄) : 1.5 to 5.0%;
- high silica glass: 95 to 98.5%.

2. The coating according to claim 1, wherein the barrier layer is densified and has a thickness of 70 to 140 µm and its density can be as much as 0.5 g/cm³.

3. A process for providing a ceramic substrate with a coating according to claim 1, which essentially comprises the steps consisting of:
- preparing a first slurry of a powder consisting of 0.1 to 10 weight % of silicon tetraboride (with over 96 weight % of SiB₄) and 90 to 99.9 weight % of quartz glass, in a compatible dispersion medium, preferably in distilled water, with a powder to liquid weight ratio of 1:1 to 1:5;
- applying this first slurry, by spraying under pressure, onto the ceramic substrate to be coated, which has undergone a preparatory treatment;
- drying the layer thus obtained and firing it at a temperature of between 1100 and 1150°C for 10 to 20 minutes, to obtain a barrier layer;
- preparing a second slurry of a powder consisting of 1.5 to 5.0 weight % of silicon tetraboride (with over 96 weight % of SiB₄) and from 95 to 98.5 weight % of high silica glass in a compatible dispersion medium, preferably in distilled water, with a powder to liquid weight ratio of 1:1 to 1:5;
- applying this second slurry, by spraying under pressure, onto the barrier layer formed previously;
- drying the layer thus obtained and firing it at a temperature of 1250 to 1300°C for 10 to 20 minutes, to obtain an emissivity glaze layer.

4. The process according to claim 3, wherein the ceramic substrate comprises one or more compounds selected from the group consisting of Al₂O₃, ZrO₂, SiO₂, SiC and Si₃N_{4,} and has a density higher than 0.1 g/cm³.

5. The process according to claim 3 or 4, wherein the content of silicon tetraboride particles the size of which is less than 5 µm, is 70 to 80 weight % of the said silicon tetraboride.

6. The process according to anyone of claims 3 to 5, wherein the SiO₂ content of the quartz glass is 99.96 weight %.

7. The process according to anyone of claims 3 to 6, wherein the high silica glass has the following weight composition:
| | | | |
|---|---|---|---|
| SiO₂ | 94 to 96 % | B₂O₃ | 3.5 to 6 % |
| Al₂O₃ | 0.1 to 0.5 % | Na₂O | 0.1 to 0.5 % |

8. The process according to anyone of claims 3 to 7, wherein the coating layers are applied at an air pressure of 0.8.10⁵ to 1.1.10⁵ Pa.

## Patentansprüche

1. Hochtemperaturüberzug auf keramischem, insbesondere porösem Substrat, dadurch gekennzeichnet, daß dieser Überzug eine Quarzglas und Siliciumtetraborid mit mehr als 96 Gew.-% SiB₄ enthaltende Sperrschicht (Grundschicht) sowie eine Glas mit einem hohen Gehalt an Silicium und Siliciumtetraborid mit mehr als 96 Gew.-% SiB₄ enthaltende Emaillierungsschicht (Deckschicht) für spezifische Ausstrahlung umfaßt, wobei die Schichten die folgenden Zusammensetzungen in Gew.-% aufweisen:
Sperrschicht:
- Siliciumtetraborid (mit mehr als 96 Gew.-% SiB₄): 0,1 bis 10 ;
- Quarzglas: 90 bis 99,9 ;
Emaillierungsschicht für spezifische Ausstrahlung:
- Siliciumtetraborid (mit mehr als 96 Gew.-% SiB₄): 1,5 bis 5,0 ;
- Glas mit hohem Gehalt an Silicium: 95 bis 98,5 .

2. Überzug nach Anspruch 1, dadurch gekennzeichnet, daß die Sperrschicht verdichtet ist und eine Stärke von 70 bis 140 µm aufweist und seine Dichte 0,5 g/cm³ erreichen kann.

3. Verfahren zur Ausstattung eines keramischen, insbesondere porösen Substrats mit einem Überzug gemäß Anspruch 1, dadurch gekennzeichnet, daß es im wesentlichen die Schritte umfaßt:
- Herstellung einer ersten Aufschlämmung eines aus 0,1 bis 10 Gew.-% Siliciumtetraborid (mit mehr als 96 Gew.-% SiB₄) und 90 bis 99,9 Gew.-% Quarzglas zusammengesetzten Pulvers in einem passenden Dispersionsmedium, vorzugsweise destilliertem Wasser, mit einem Gewichtsverhältnis Pulver/Flüssigkeit von 1:1 bis 1:5 ;
- Auftragen dieser ersten Aufschlämmung mittels Druckzerstäubung auf das zu überziehende, einer Vorbehandlung unterzogene keramische Substrat;
- Trocknen der so erhaltenen Schicht und Aushärten bei einer Temperatur von 1100 bis 1150°C während 10 bis 20 Minuten, um eine Sperrschicht zu erhalten;
- Herstellung einer zweiten Aufschlämmung eines aus 1,5 bis 5,0 Gew.-% Siliciumtetraborid (mit mehr als 96 Gew.-% SiB₄) und 95 bis 98,9 Gew.-% Glas mit hohem Siliciumgehalt zusammengesetzten Pulvers in einem passenden Dispersionsmedium, vorzugsweise destilliertem Wasser, mit einem Gewichtsverhältnis Pulver/ Flüssigkeit von 1:1 bis 1:5 ;
- Auftragen dieser zweiten Aufschlämmung mittels Druckzerstäubung auf die zuvor gebildete Sperrschicht;
- Trocknen der so erhaltenen Schicht und Aushärten bei einer Temperatur von 1250 bis 1300°C während 10 bis 20 Minuten, um eine Emaillierungsschicht für spezifische Ausstrahlung zu erhalten.

4. Verfahren nach Anspruch 3, dadurch gekennzeichnet, daß das keramische Substrat eine oder mehrere Zusammensetzungen, ausgewählt aus der Gruppe Al₂O₃, ZrO₂, SiO₂, SiC und Si₃N₄ umfaßt und eine Dichte über 0,1 g/cm³ aufweist.

5. Verfahren nach Anspruch 3 oder 4, dadurch gekennzeichnet, daß der Gehalt an Teilchen aus Siliciumtetraborid mit einer Größe unter 5 µm 70 bis 80 Gew.-% des Siliciumtetraborids beträgt.

6. Verfahren nach einem der Ansprüche 3 bis 5, dadurch gekennzeichnet, daß der SiO₂-Gehalt des Quarzglases 99,96 Gew.-% beträgt.

7. Verfahren nach einem der Ansprüche 3 bis 6, dadurch gekennzeichnet, daß das Glas mit hohem Siliciumgehalt die folgende Zusammensetzung in Gew.-% aufweist:
| | | | |
|---|---|---|---|
| SiO₂ | 94 bis 96 | B₂O₃ | 3,5 bis 6 |
| Al₂O₃ | 0,1 bis 0,5 | Na2O | 0,1 bis 0,5 . |

8. Verfahren nach einem der Ansprüche 3 bis 7, dadurch gekennzeichnet, daß die Schichten für den Überzug mit einem Luftdruck von 0,8 x 10⁵ bis 1,1 x 10⁵ aufgetragen werden.
